# EUROPEAN PATENT SPECIFICATION

(11) **EP 4 002 656 B1**
(45) Date of publication and mention of the grant of the patent: **24.04.2024**
(21) Application number: 19944109.8
(22) Date of filing: 29.10.2019
(51) Int. Cl.: H02K 1/32, H02K 3/24, H02K 5/20, H02K 9/19, B60K 1/00, B60K 11/02, B60K 11/04, H02K 9/26

(54) **OIL-WATER-COOLED ELECTRIC DRIVE ASSEMBLY AND NEW ENERGY AUTOMOBILE**
ÖL-WASSERGEKÜHLTE ELEKTRISCHE ANTRIEBSANORDNUNG UND FAHRZEUG BETRIEBEN MIT "NEUEN" ENERGIEN
ENSEMBLE D'ENTRAÎNEMENT ÉLECTRIQUE À REFROIDISSEMENT HUILE-EAU ET AUTOMOBILE FONCTIONNANT AUX ÉNERGIES NOUVELLES

(30) Priority: 03.09.2019 CN 201910828484
(43) Date of publication of application: 25.05.2022
(73) Proprietor: Jing-Jin Electric Technologies Co., Ltd., Beijing 100016 (CN)
(72) Inventor: YU, Ping, Beijing 100016 (CN); LI, Jianwen, Beijing 100016 (CN); YANG, Xudong, Beijing 100016 (CN)
(74) Representative: Schwarz & Partner Patentanwälte GmbH
(86) International application number: PCT/CN2019/114070
(87) International publication number: WO 2021/042466

(56) References cited:
- WO-A1-2019/131419
- CN-A- 107 864 691
- CN-A- 110 176 826
- CN-U- 206 943 400
- CN-U- 208 118 917
- US-A- 4 627 793
- US-B1- 10 272 767

## Description

### TECHNICAL FIELD

The present disclosure relates to the field of electric drive assembly manufacturing, in particular to an electric drive assembly with oil/water dual cooling and a new energy vehicle.

### BACKGROUND

As the problems such as oil shortage, air pollution and national energy security become getting worse, the new energy vehicle industry is developing rapidly. As one of the core parts of new energy vehicles, the motor gearbox drive assembly has an important impact on the layout of new energy vehicle industry. The motor gearbox drive assembly of new energy vehicle has the characteristics of high rotation speed and high power density, and has high requirements for reliability, cooling and lubrication. At present, the cooling of motor mainly depends on the circulating cooling fluid in the water jacket to cool the stator, while the cooling of windings depends on natural heat dissipation without being directly cooled, so the motor cannot run for a long time at maximum power. Moreover, the cooling of the gearbox depends on air cooling, and the cooling effect is poor. Especially in the high rotation speed range, the temperature rises very fast, which tend to cause the early failure of internal parts.

At the same time, the end customers' requirements for the mileage and performance of the whole vehicle become increasingly higher, and the electric drive system is required to have good power performance and smoothness. When the torque density is improved, it is urgent to design a set of efficient cooling system to meet the development needs of the market.

D1(WO2019131419A1) discloses an electric drive assembly with oil/water dual cooling.

D2(CN208118917U) discloses a two refrigerated automotive power assemblies, including motor, reduction gear and the two cooling module who has the cooling water course. Wherein, the reduction gear includes hollow structure's pivot, and pivot and rotor fixed connection. Two cooling module include oily cooling unit and water cooling unit. Oil cooling unit includes into oil pipe and play oil pipe, advances oil pipe, pivot and go out oil pipe to form the cooling oil circuit. Water cooling unit includes inlet tube and outlet pipe, inlet tube, cooling water course and outlet pipe formation water cooling channel. Advance oil pipe and go out oil pipe to pass through the heat abstractor intercommunication, oily cooling unit and heat abstractor form oily refrigeration cycle return circuit. The inlet tube passes through the heat abstractor intercommunication with the outlet pipe, and water cooling unit and heat abstractor form water refrigeration cycle return circuit. The utility model also provides an electric automobile. Use in the time of oil cooling unit and water cooling unit for the cooling efficiency of two refrigerated automotive power assemblies is higher, and then makes electric automobile's cooling efficiency higher.

### SUMMARY

In view of the above problems, the present disclosure is proposed to provide an electric drive assembly with oil/water dual cooling and a new energy vehicle that solve or at least partially solve the above technical problems.

In order to achieve the above object, the present disclosure adopts the following technical solutions.

The invention is set out in the appended set of claims.

The technical solutions of the electric drive assembly with oil/water dual cooling in the present disclosure have the following advantages:
The electric drive assembly of the present disclosure reduces the number of parts, reduces the cost and improves the efficiency of the assembly.

The oil cooling module in the present disclosure introduces the lubricating oil in the gearbox into the front and rear windings of the motor through multiple passages, so that the temperature of motor windings is reduced and they can run for a long time under the maximum power.

The water cooling module in the present disclosure introduces the motor stator cooling fluid into the heat sink of the gearbox to cool the lubricating oil of the gearbox, so as to ensure that the gearbox has good heat dissipation performance at high rotation speed.

The above is only an overview of the technical solutions of the present disclosure. In order to better understand the technical means of the present disclosure so that it can be implemented according to the contents of the description, and in order to make the above and other objects, features and advantages of the present disclosure more obvious and easy to understand, the specific embodiments of the present disclosure are given below.

### BRIEF DESCRIPTION OF DRAWINGS

Throughout the drawings, like reference numerals denote like components. In the drawings:
FIG. 1 is a schematic view of the structure of an electric drive assembly with oil/water dual cooling in an embodiment of the present disclosure; and
FIG. 2 is a perspective view of an electric drive assembly with oil/water dual cooling in an embodiment of the present disclosure.

In the drawings: 1. motor water jacket, 2. motor front winding, 3. motor rear winding, 4. first water inlet, 5. strong magnetic body, 6. gearbox housing, 7. first oil inlet, 8. gearbox cover, 9. rear bearing, 10. strong magnetic body, 11. second oil inlet, 12. oil conveying device, 13. heat sink, 14. second water outlet, 15. first oil passage, 16. motor front end oil passage, 17. front bearing, 18. motor front end shaft inner hole, 19. first oil outlet hole at the front side, 20. first oil outlet hole at the rear side, 21. oil return passage, 22. motor shaft, 23. second oil outlet hole, 24. strong magnetic body, 25. intermediate bearing, 26. first water outlet, 27. oil return port, 28. inner hole of the first rotating shaft, 29. second water inlet, 30. strong magnetic body.

### DETAILED DESCRIPTION

Illustrative embodiments of the present disclosure will be described in more detail with reference to the drawings. The drawings show the illustrative embodiments of the present disclosure. The embodiments are provided for a more thorough and complete understanding of the present disclosure, so as to fully convey the scope of the present disclosure to those skilled in the art.

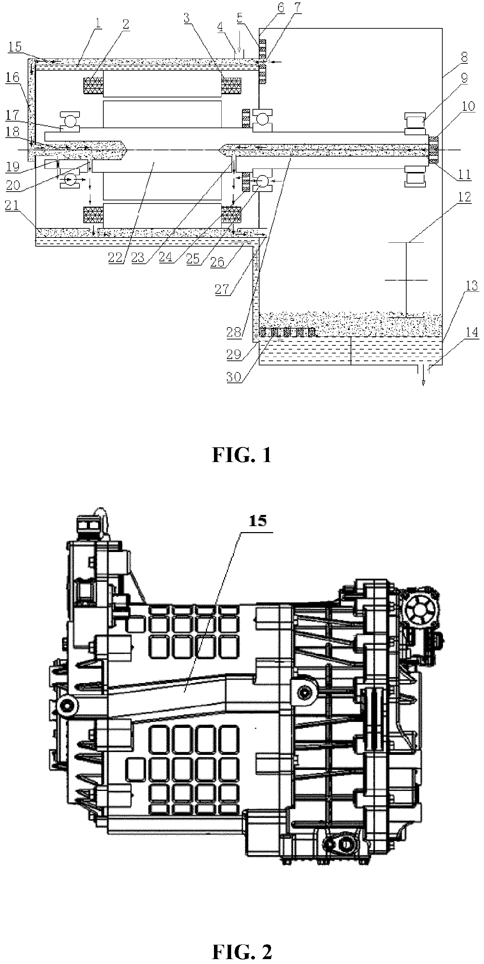

In order to more clearly describe the technical solutions of the present disclosure, it is specially specified that in FIG. 1, the left side is the front end or front side, and the right side is the rear end or rear side.

### First Embodiment

As shown in FIG. 1 and FIG. 2, the first embodiment of the present disclosure discloses an electric drive assembly with oil/water dual cooling, comprising a motor module, a gearbox module, a water cooling module and an oil cooling module. The motor module comprises a motor housing, a motor shaft and a stator, and the stator is provided with windings. The gearbox module comprises a gearbox housing 6 and a first rotating shaft of gearbox, and the gearbox housing 6 is disposed at the rear end of the motor housing. The connection structure of the gearbox housing and the motor housing is shown in FIG. 1 and FIG. 2.

The water cooling module in the embodiment of the present disclosure comprises a motor water jacket 1 and a heat sink 13. The motor water jacket 1 is sleeved on the motor housing. The upper part of the motor water jacket 1 is provided with a first water inlet 7, and the lower part of the rear end of the motor water jacket 1 is provided with a first water outlet 26. The heat sink 13 is disposed at the lower end of the gearbox housing 6, and the front end and the rear end of the heat sink 13 are provided with a second water inlet 29 and a second water outlet 14 respectively. The heat sink can be communicated with the motor water jacket, the cooling fluid in the motor water jacket is introduced into the heat sink through a pipe or a passage provided in the gearbox housing, and the cooling fluid flows back to the vehicle reservoir after circulation. Of course, the heat sink and motor water jacket may also be connected to the vehicle reservoir through pipes respectively.

The oil cooling module in the embodiment of the present disclosure comprises an oil conveying device 12, an oil conveying passage and an oil return passage 21. The oil conveying device 12 is disposed at the bottom of the gearbox housing 6, and the oil return passage 21 is disposed at the bottom of the motor housing. The oil conveying device 12 can lift, splash or spray the lubricating oil from the bottom of the gearbox housing, so as to send the lubricating oil into the oil conveying passage. The oil conveying passage can deliver the lubricating oil in the gearbox housing 6 into the motor housing, so as to realize oil cooling and lubrication of the motor. The oil return passage 21 can return the lubricating oil into the gearbox housing, thereby realizing one circulation of lubricating oil.

A siphon port or an oil holding device may be provided at the inlet of the oil conveying passage to facilitate the lubricating oil to enter inside the oil conveying passage.

Further, in an embodiment, the oil conveying device 12 is one or more gears, and/or the oil conveying device is one or more nozzles. The oil conveying device may be one or more gears, which can splash the lubricating oil to realize oil conveying. The oil conveying device may also be a nozzle, which can be used to spray oil into the passage. Of course, the oil conveying device may also be other devices that drive oil to move.

According to the invention, the oil conveying passage comprises a first oil conveying passage. The first oil conveying passage comprises a first oil inlet 7, a first oil passage 15, a motor front end oil passage 16 and a motor front end shaft inner hole 18. The first oil inlet 7 is disposed on the front end face of the gearbox housing 6 above the motor housing, the first oil passage 15 is disposed above the motor housing and is communicated with the motor front end oil passage 16 and the motor front end shaft inner hole 18. The bottom of the motor front end shaft inner hole 18 is provided with a first oil outlet hole.

In the present embodiment, the first oil conveying passage mainly comprises a first oil passage 15 on the upper part of the motor housing. The first oil passage 15 may be parallel to the motor main shaft or spirally disposed on the upper part of the motor housing. Alternatively, the first oil passage may be disposed inside the motor water jacket or outside the motor water jacket, so as to further cool the oil. Then, the lubricating oil in the first oil passage 15 is delivered to the motor front end oil passage by gravity, and then the lubricating oil flows into the motor front end shaft inner hole.

In the present embodiment, the first oil passage and the motor front end oil passage may be built-in passages formed on the motor housing by casting, or external oil pipes. The oil pipe connection avoids the complicated oil passage structure on the housing, reduces the casting difficulty of the housing, and is convenient for layout on the whole vehicle.

Further, there are at least two first oil outlet holes, which are disposed at the front side and the rear side of the front end bearing of the motor shaft respectively. The first oil outlet hole at the rear side corresponds to the front end winding of the motor stator. In order to make the lubricating oil delivered by the first oil conveying passage cool the motor front end bearing and the stator front end winding coil, at least two first oil outlet holes or at least two groups of first oil outlet holes are provided on the front end of the motor shaft, which are disposed at the front and rear sides of the front end bearing of the motor shaft respectively. The oil outlet hole at the front side can guide the oil into the front end bearing, and the oil outlet hole at the rear side can face the stator front end winding, When the motor shaft rotates, due to the action of centrifugal force, the lubricating oil in the motor front end shaft inner hole will be sprayed out through the first oil outlet holes, so as to cool the winding.

In an embodiment, the oil conveying passage further comprises a second oil conveying passage. The second oil conveying passage comprises a second oil inlet 11, an inner hole 28 of the first rotating shaft of gearbox, and a second oil outlet hole 23. The second oil inlet 11 is disposed at the rear end of the first rotating shaft of gearbox. The first rotating shaft of gearbox is coaxial with the motor shaft. The second oil outlet hole 23 is disposed at the front side of a rear end bearing of the motor shaft, and the position of the second oil outlet hole 23 is facing a rear winding 3 of the motor stator.

The second oil conveying passage delivers the lubricating oil into the motor housing through the first rotating shaft of gearbox that is coaxial with the motor main shaft. The first rotating shaft of gearbox is hollow and extends at least to a position of the motor shaft at the rear winding of the stator. Similarly, due to the action of centrifugal force, the lubricating oil is sprayed out through the second oil outlet hole, so as to cool the rear winding of the motor stator.

In the present embodiment, the motor shaft and the first rotating shaft of gearbox are designed to be coaxial, which improves the transmission efficiency, simplifies the structure of the electric drive assembly, and reduces the design and manufacturing costs.

In an embodiment, the oil conveying passage comprises a third oil conveying passage, and the third oil conveying passage is an oil passage formed by a rear end bearing 25 of the motor shaft. The third oil conveying passage is a passage for cooling and lubricating the rear end bearing of the motor shaft.

Preferably, strong magnetic bodies are provided at an oil inlet of the oil conveying passage, the bottom of the gearbox housing 6 and the front side of the rear end bearing 25 of the motor shaft respectively. The purpose of providing the strong magnetic bodies is to adsorb the iron filings in the lubricating oil, so as to purify the lubricating oil and reduce the damage to the bearing.

In an embodiment, the water cooling module further comprises an intermediate passage or water pipe disposed at the front end of the gearbox housing 6. The intermediate passage or water pipe is communicated with the first water outlet 26 and the second water inlet 29. The motor water jacket and heat sink 13 are connected in series through the intermediate passage or water pipe disposed on the gearbox housing.

In an embodiment, the heat sink 13 and the gearbox housing 6 may be cast integrally. Alternatively, the heat sink 13 may be regarded as a separate part and installed at the bottom of the gearbox housing 6.

To sum up, the present disclosure discloses an electric drive assembly with oil/water dual cooling. The electric drive assembly comprises a motor module, a gearbox module, a water cooling module and an oil cooling module. The motor module comprises a motor housing, a motor shaft and a stator. The gearbox module comprises a gearbox housing and a first rotating shaft of gearbox, and the gearbox housing is disposed at a rear end of the motor housing. The water cooling module comprises a motor water jacket and a heat sink, the motor water jacket is sleeved on the motor housing, an upper part of the motor water jacket is provided with a first water inlet, a lower part of a rear end of the motor water jacket is provided with a first water outlet, the heat sink is disposed at a lower end of the gearbox housing, and a front end and a rear end of the heat sink are respectively provided with a second water inlet and a second water outlet. The oil cooling module comprises an oil conveying device, an oil conveying passage and an oil return passage, the oil conveying device is disposed at a bottom of the gearbox housing, and the oil return passage is disposed at a bottom of the motor housing. In this technical solution, the lubricating oil in the gearbox is introduced into the front and rear windings of the motor through multiple passages of the oil cooling module, the cooling performance of the motor is improved, the cost of the drive assembly is reduced and the transmission efficiency is improved. Moreover, in this technical solution, the motor housing is cooled through the motor water jacket of the water-cooling module, and the lubricating oil in the gearbox housing is cooled through the heat sink at the bottom of the gearbox, thereby solving the heat dissipation problem when the gearbox of the new energy vehicle operates at high speed constantly, and thus improving the service life and reliability of the gears and bearings.

### Second Embodiment

The present embodiment of the present disclosure also discloses a new energy vehicle comprising any one of the electric drive assemblies with oil/water dual cooling as stated above.

The scope is defined by the claims.

## Claims

1. An electric drive assembly with oil/water dual cooling,
the electric drive assembly comprises a motor module, a gearbox module, a water cooling module and an oil cooling module;
the motor module comprises a motor housing, a motor shaft (22) and a stator;
the gearbox module comprises a gearbox housing (6) and a first rotating shaft of gearbox, and the gearbox housing (6) is disposed at a rear end of the motor housing;
the oil cooling module comprises an oil conveying device (12), an oil conveying passage and an oil return passage (21), the oil conveying device (12) is disposed at a bottom of the gearbox housing (6), the oil conveying passage is communicated with an inner cavity of the motor housing and an inner cavity of the gearbox housing (6), and the oil return passage (21) is disposed at a bottom of the motor housing,
**characterized in that**:
the water cooling module comprises a motor water jacket (1) and a heat sink (13), the motor water jacket (1) is sleeved on the motor housing, an upper part of the motor water jacket (1) is provided with a first water inlet (4), a lower part of a rear end of the motor water jacket (1) is provided with a first water outlet (26), the heat sink (13) is disposed at a lower end of the gearbox housing (6), and a front end and a rear end of the heat sink (13) are respectively provided with a second water inlet (29) and a second water outlet (14);
the oil conveying passage comprises a first oil conveying passage, and the first oil conveying passage comprises a first oil inlet (7), a first oil passage (15), a motor front end oil passage (16) and a motor front end shaft inner hole (18);
the first oil inlet (7) is disposed on a front end face of the gearbox housing (6) above the motor housing, the first oil passage (15) is disposed above the motor housing and is communicated with the motor front end oil passage (16) and the motor front end shaft inner hole (18), and a bottom of the motor front end shaft inner hole (18) is provided with a first oil outlet hole,
there are at least two first oil outlet holes, which are disposed at a front side and a rear side of a front end bearing of the motor shaft (22) respectively, and the first oil outlet hole at the rear side (20) corresponds to a front end winding of the motor stator.

2. The electric drive assembly according to claim 1, **characterized in that**: the oil conveying device (12) is one or more gears, and/or the oil conveying device (12) is one or more nozzles.

3. The electric drive assembly according to claim 1, **characterized in that**: the oil conveying passage comprises a second oil conveying passage, and the second oil conveying passage comprises a second oil inlet (11), an inner hole of the first rotating shaft (28) of gearbox and a second oil outlet hole (23);
the second oil inlet (11) is disposed at a rear end of the first rotating shaft of gearbox, the first rotating shaft of gearbox is coaxial with the motor shaft (22), the second oil outlet hole (23) is disposed in a front part of a rear end bearing of the motor shaft (22), and a position of the second oil outlet hole (23) is facing a rear winding of the motor stator.

4. The electric drive assembly according to claim 1, **characterized in that**: the oil conveying passage comprises a third oil conveying passage, and the third oil conveying passage is an oil passage formed by a rear end bearing of the motor shaft (22).

5. The electric drive assembly according to claim 1, **characterized in that**: strong magnetic bodies are provided at an oil inlet of the oil conveying passage, a bottom of the gearbox housing (6) and a front side of a rear end bearing of the motor shaft (22) respectively.

6. The electric drive assembly according to claim 1, **characterized in that**: the water cooling module further comprises an intermediate passage or water pipe disposed at a front end of the gearbox housing (6), and the intermediate passage or water pipe is communicated with the first water outlet (26) and the second water inlet (29).

7. The electric drive assembly according to claim 1, **characterized in that**: the heat sink (13) and the gearbox housing (6) are integrally cast, or the heat sink (13) is installed at the bottom of the gearbox housing (6).

8. A new energy vehicle, comprising the electric drive assembly with oil/water dual cooling according to any one of claims 1-7.

## Patentansprüche

1. Elektrische Antriebsanordnung mit Öl/Wasser-Doppelkühlung,
wobei die elektrische Antriebsanordnung ein Motormodul, ein Getriebemodul, ein Wasserkühlungsmodul und ein Ölkühlungsmodul umfasst;
das Motormodul ein Motorgehäuse, eine Motorwelle (22) und einen Stator umfasst; das Getriebemodul ein Getriebegehäuse (6) und eine erste rotierende Welle des Getriebes umfasst und das Getriebegehäuse (6) am hinteren Ende des Motorgehäuses angeordnet ist;
das Ölkühlungsmodul eine Ölfördervorrichtung (12), einen Ölförderdurchgang und einen Ölrückführungsdurchgang (21) umfasst, wobei die Ölfördervorrichtung (12) am Boden des Getriebegehäuses (6) angeordnet ist, der Ölförderdurchgang mit einem Innenhohlraum des Motorgehäuses und einem Innenhohlraum des Getriebegehäuses (6) kommuniziert und der Ölrückführungsdurchgang (21) am Boden des Motorgehäuses angeordnet ist,
**dadurch gekennzeichnet, dass**:
das Wasserkühlungsmodul einen Motorwassermantel (1) und eine Wärmesenke (13) umfasst, der Motorwassermantel (1) hülsenförmig über das Motorgehäuse geschoben ist, ein oberer Teil des Motorwassermantels (1) mit einem ersten Wassereinlass (4) versehen ist, ein unterer Teil eines hinteren Endes des Motorwassermantels (1) mit einem ersten Wasserauslass (26) versehen ist, die Wärmesenke (13) am unteren Ende des Getriebegehäuses (6) angeordnet ist und ein vorderes Ende und ein hinteres Ende der Wärmesenke (13) mit einem zweiten Wassereinlass (29) bzw. einem zweiten Wasserauslass (14) versehen sind;
der Ölförderdurchgang einen ersten Ölförderdurchgang umfasst und der erste Ölförderdurchgang einen ersten Öleinlass (7), einen ersten Öldurchgang (15), einen Motor-Vorderende-Öldurchgang (16) und eine Motor-Vorderende-Welleninnenbohrung (18) umfasst;
der erste Öleinlass (7) an einer Vorderendfläche des Getriebegehäuses (6) über dem Motorgehäuse angeordnet ist, der erste Öldurchgang (15) über dem Motorgehäuse angeordnet ist und mit dem Motor-Vorderende-Öldurchgang (16) und der Motor-Vorderende-Welleninnenbohrung (18) kommuniziert, und ein Boden der Motor-Vorderende-Welleninnenbohrung (18) mit einer ersten Ölauslassbohrung versehen ist,
es zumindest zwei erste Ölauslassbohrungen gibt, die an einer Vorderseite bzw. einer Hinterseite eines Vorderende-Lagers der Motorwelle (22) angeordnet sind und die erste Ölauslassbohrung an der Hinterseite (20) einer Vorderende-Wicklung des Motorstators entspricht.

2. Elektrische Antriebsanordnung nach Anspruch 1, **dadurch gekennzeichnet, dass**: die Ölfördervorrichtung (12) ein oder mehrere Zahnräder ist und/oder die Ölfördervorrichtung (12) eine oder mehrere Düsen ist.

3. Elektrische Antriebsanordnung nach Anspruch 1, **dadurch gekennzeichnet, dass**: der Ölförderdurchgang einen zweiten Ölförderdurchgang umfasst und der zweite Ölförderdurchgang einen zweiten Öleinlass (11), eine Innenbohrung der ersten rotierenden Welle (28) eines Getriebes und eine zweite Ölauslassbohrung (23) umfasst;
der zweite Öleinlass (11) an einem hinteren Ende der ersten rotierenden Welle des Getriebes angeordnet ist, die erste rotierende Welle des Getriebes koaxial mit der Motorwelle (22) ist, die zweite Ölauslassbohrung (23) in einem vorderen Teil eines Hinterende-Lagers der Motorwelle (22) angeordnet ist und eine Position der zweiten Ölauslassbohrung (23) einer hinteren Windung des Motorstators zugewandt ist.

4. Elektrische Antriebsanordnung nach Anspruch 1, **dadurch gekennzeichnet, dass**: der Ölförderdurchgang einen dritten Ölförderdurchgang umfasst und der dritte Ölförderdurchgang ein Öldurchgang ist, der durch ein Hinterende-Lager der Motorwelle (22) gebildet wird.

5. Elektrische Antriebsanordnung nach Anspruch 1, **dadurch gekennzeichnet, dass**: starke Magnetkörper an einem Öleinlass des Ölförderdurchgangs, einem Boden des Getriebegehäuses (6) bzw. einer Vorderseite eines Hinterende-Lagers der Motorwelle (22) bereitgestellt sind.

6. Elektrische Antriebsanordnung nach Anspruch 1, **dadurch gekennzeichnet, dass**: das Wasserkühlungsmodul außerdem einen Zwischendurchgang oder ein Zwischenwasserrohr umfasst, der/das an einem Vorderende des Getriebegehäuses (6) angeordnet ist und der Zwischendurchgang oder das Zwischenwasserrohr mit dem ersten Wasserauslass (26) und dem zweiten Wassereinlass (29) kommuniziert.

7. Elektrische Antriebsanordnung nach Anspruch 1, **dadurch gekennzeichnet, dass**: die Wärmesenke (13) und das Getriebegehäuse (6) einstückig gegossen sind oder die Wärmesenke (13) am Boden des Getriebegehäuses (6) eingebaut ist.

8. Fahrzeug mit neuer Energieversorgung, das eine elektrische Antriebsanordnung mit Öl/Wasser-Doppelkühlung nach einem der Ansprüche 1-7 umfasst.

## Revendications

1. Ensemble d'entraînement électrique avec double refroidissement huile/eau,
l'ensemble d'entraînement électrique comprend un module de moteur, un module de boîte de vitesses, un module de refroidissement par eau et un module de refroidissement par huile ;
le module de moteur comprend un boîtier de moteur, un arbre de moteur (22) et un stator ;
le module de boîte de vitesses comprend un boîtier de boîte de vitesses (6) et un premier arbre rotatif de boîte de vitesses, et le boîtier de boîte de vitesses (6) est disposé à une extrémité arrière du boîtier de moteur ;
le module de refroidissement par huile comprend un dispositif de transport d'huile (12), un passage de transport d'huile et un passage de retour d'huile (21), le dispositif de transport d'huile (12) est disposé au niveau d'une partie inférieure du boîtier de boîte de vitesses (6), le passage de transport d'huile est en communication avec une cavité intérieure du boîtier de moteur et une cavité intérieure du boîtier de boîte de vitesses (6), et le passage de retour d'huile (21) est disposé au niveau d'une partie inférieure du boîtier de moteur,
**caractérisé en ce que** :
le module de refroidissement par eau comprend une chemise d'eau de moteur (1) et un dissipateur thermique (13), la chemise d'eau de moteur (1) est manchonnée sur le boîtier de moteur, une partie supérieure de la chemise d'eau de moteur (1) est pourvue d'une première entrée d'eau (4), une partie inférieure d'une extrémité arrière de la chemise d'eau de moteur (1) est pourvue d'une première sortie d'eau (26), le dissipateur thermique (13) est disposé à une extrémité inférieure du boîtier de boîte de vitesses (6), et une extrémité avant et une extrémité arrière du dissipateur thermique (13) sont respectivement pourvues d'une seconde entrée d'eau (29) et d'une seconde sortie d'eau (14) ;
le passage de transport d'huile comprend un premier passage de transport d'huile, et le premier passage de transport d'huile comprend une première entrée d'huile (7), un premier passage d'huile (15), un passage d'huile d'extrémité avant de moteur (16) et un trou intérieur d'arbre d'extrémité avant de moteur (18) ;
la première entrée d'huile (7) est disposée sur une face d'extrémité avant du boîtier de boîte de vitesses (6) au-dessus du boîtier du moteur, le premier passage d'huile (15) est disposé au-dessus du boîtier du moteur et est en communication avec le passage d'huile d'extrémité avant de moteur (16) et le trou intérieur d'arbre d'extrémité avant de moteur (18), et une partie inférieure du trou intérieur d'arbre d'extrémité avant de moteur (18) est muni d'un premier trou de sortie d'huile,
il existe au moins deux premiers trous de sortie d'huile, qui sont disposés au niveau d'un côté avant et d'un côté arrière d'un palier d'extrémité avant de l'arbre de moteur (22), respectivement, et le premier trou de sortie d'huile au niveau du côté arrière (20) correspond à un enroulement d'extrémité avant du stator de moteur.

2. Ensemble d'entraînement électrique selon la revendication 1, **caractérisé en ce que** : le dispositif de transport d'huile (12) est un ou plusieurs engrenages, et/ou le dispositif de transport d'huile (12) est une ou plusieurs buses.

3. Ensemble d'entraînement électrique selon la revendication 1, **caractérisé en ce que** : le passage de transport d'huile comprend un deuxième passage de transport d'huile, et le deuxième passage de transport d'huile comprend une seconde entrée d'huile (11), un trou intérieur du premier arbre rotatif (28) de la boîte de vitesses et un second trou de sortie d'huile (23) ;
la seconde entrée d'huile (11) est disposée à une extrémité arrière du premier arbre rotatif de boîte de vitesses, le premier arbre rotatif de boîte de vitesses est coaxial avec l'arbre de moteur (22), le second trou de sortie d'huile (23) est disposé dans une partie avant d'un palier d'extrémité arrière de l'arbre de moteur (22), et une position du second trou de sortie d'huile (23) fait face à un enroulement arrière du stator de moteur.

4. Ensemble d'entraînement électrique selon la revendication 1, **caractérisé en ce que** : le passage de transport d'huile comprend un troisième passage de transport d'huile, et le troisième passage de transport d'huile est un passage d'huile formé par un palier d'extrémité arrière de l'arbre de moteur (22).

5. Ensemble d'entraînement électrique selon la revendication 1, **caractérisé en ce que** : des corps magnétiques puissants sont prévus au niveau d'une entrée d'huile du passage de transport d'huile, d'une partie inférieure du boîtier de boîte de vitesses (6) et d'un côté avant d'un palier d'extrémité arrière de l'arbre de moteur (22), respectivement.

6. Ensemble d'entraînement électrique selon la revendication 1, **caractérisé en ce que** : le module de refroidissement par eau comprend en outre un passage ou un tuyau d'eau intermédiaire disposé à une extrémité avant du boîtier de boîte de vitesses (6), et le passage ou le tuyau d'eau intermédiaire est en communication avec la première sortie d'eau (26) et la seconde entrée d'eau (29).

7. Ensemble d'entraînement électrique selon la revendication 1, **caractérisé en ce que** : le dissipateur thermique (13) et le boîtier de boîte de vitesses (6) sont moulés d'un seul tenant, ou le dissipateur thermique (13) est installé au niveau de la partie inférieure du boîtier de boîte de vitesses (6).

8. Véhicule à énergie nouvelle, comprenant l'ensemble d'entraînement électrique à double refroidissement huile/eau selon l'une quelconque des revendications 1 à 7.
